(19) Europäisches Patentamt
European Patent Office
Office européen des brevets

(11) **EP 0 629 835 B1**

(12) **EUROPEAN PATENT SPECIFICATION**

(45) Date of publication and mention
of the grant of the patent:
**15.12.1999 Bulletin 1999/50**

(51) Int Cl.$^6$: **G01B 11/16**

(21) Application number: **94304294.5**

(22) Date of filing: **14.06.1994**

(54) **Strain measuring instrument**

Deformationsmessinstrument

Instrument de mesure de déformation

(84) Designated Contracting States:
**DE FR GB**

(30) Priority: **15.06.1993 JP 14366693**

(43) Date of publication of application:
**21.12.1994 Bulletin 1994/51**

(73) Proprietor: **SHIMDAZU CORPORATION**
**Nakagyo-ku, Kyoto 604 (JP)**

(72) Inventor: **Kamegawa, Masayuki**
**Nara 631 (JP)**

(74) Representative: **Harland, Linda Jane et al**
**c/o Reddie & Grose**
**16 Theobalds Road**
**London WC1X 8PL (GB)**

(56) References cited:
**EP-A- 0 347 912**      **US-A- 4 031 746**

## Description

### FIELD OF THE INVENTION

The present invention relates to a strain measuring instrument for use in association with material testing machines, and more particularly to an instrument for measuring any strain such as elongation or contraction of a test piece in a non-contact manner with the use of laser beams. In particular, the invention relates to a strain measuring instrument comprising a source of laser beams for projecting at least one laser beam on a test piece, image sensors for receiving reflected light from respective laser applied spots on the test piece and an arithmetic means for calculating the amount of strain of the test piece by reading outputs from the image sensors.

### BACKGROUND OF THE INVENTION

It is known in the art to measure any strain involving dimensional change occurring in a test piece through the observation of a speckle pattern produced on it when it, is irradiated with a beam of laser. For example, Japanese Patent Publication (allowed) No. 59-52963 and No. 61-27681 disclose a non-contact method for measuring a strain at a real time by means of laser beams.

The common practice with the above-identified two known methods is that a laser beam is projected on a spot of a test piece, and the reflected light is converted by an image sensor into electric signals depending upon the speckle pattern. Then the amount of displacement of the speckle pattern is measured by seeking a function of correlation between signals at the pre- and post-displacement. In the latter method (No. 61-27681), in order to measure the amount of deformation of the test piece on the basis of the measured displacement of speckle pattern, two laser beams are projected onto one spot at symmetrical angles on opposite sides of a reference normal axis, and a difference in displacement between the speckle patterns produced by the two laser beams is obtained. Alternatively a single laser beam is projected on the same spot and the reflected light is observed at two spaced points so as to obtain a speckle pattern at each point of observation. Then it is observed how the speckle patterns at these points are differently displaced, and if any difference is found, the difference indicates that a deformation of the test piece has occurred.. This method is designed to cancel the data about any translation contained in the measured amount of displacement of each speckle pattern, and retain the data about the amount of displacement at the laser applied spots.

Apart from the methods utilizing speckle patterns, there is another method characterized by utilization of Doppler effect.

According to this method, two laser beams having different frequencies are projected on the same spot on a test piece at angle $2\theta$. Interference fringes are produced whose illuminating intensity is modulated by a difference $\Delta$ fin frequency between the two laser beams. If the test piece expands, the frequency changes from $\Delta f$ to $\Delta f + V/d$ by Doppler effect, where V is the velocity of the test piece and d is intervals between the fringes. When the laser beam has a frequency of $\lambda$, d is expressed as follows:

$$d = \lambda/2\sin\ \theta$$

By subjecting the velocity V to time integration, the amount of elongation of the test piece at the laser applied spot is measured. Actually, a point sensor is used to converge scattering light thereon. In general, the phase shift between the outputs of the point sensor and a reference beat signal $\Delta$ f represents the amount of displacement. Therefore, this phase shift is electrically detected, wherein a phase shift of 360° is equal to one cycle d of interference fringes.

In this way, any elongation or contraction between two laser applied spots on the test piece is measured.

However, a problem arising from the methods utilizing speckle patterns projected on a single spot on the test piece is that a local elongation or contraction within the diameter of the laser applied spots may be wrongly accepted as representing the entire elongation or contraction or the test piece. This means that if a crack occurs in other place than the laser applied spot, this fact will not be contained in the data, and therefore, the data obtained by this method becomes quite different from the data prepared by the Japanese Industrial Standard (JIS) with the use of an extensometer. This makes it difficult to achieve correlations between the two data.

The method utilizing two laser beams projected on a single spot has a disadvantage in that the angle of incidence and the angle of observation must be large enough to precisely measure a strain. As a result, if the test piece is necessarily observed in the atmospheric condition, the apparatus must be provided with a large window or a plurality of windows through which the test piece is effectively observed.

An alternative method utilizing Doppler effect detects elongation (or contraction) between the two spots but the distance therebetween is fixed irrespective of the pre- and post-displacement. However, the Japanese Industrial Standard (JIS) requires to measure elongation or contraction produced between two target points which are set in accordance with the standards. This method can not provide data which meets the data form by JIS.

European Patent Application No 0 347 912 describes a further measuring instrument of the kind to which the invention relates having means for calculating deformation and. hence, strain, in a test piece by reading the output of optical sensors.

## SUMMARY OF THE INVENTION

According to one aspect of the present invention, there is provided a strain measuring instrument of the kind referred to above, characterised in that the source of laser beams is suitable for projecting at least one beam onto two spots on the test piece. the laser applied spots being spaced from each other and aligned in a direction in which a measured strain is produced in the test piece; the image sensors are suitable for receiving the reflected light from the respective laser applied spots independently of each other so as to measure the speckle pattern at each respective laser applied spot, and the arithmetic means is suitable for calculating the function of correlation between the speckle pattern at each laser applied spot and measuring the amount of displacement of each speckle pattern so as to determine the amount of strain from the difference between the amounts of movement of the laser applied spots.

According to another aspect of the invention, there is provided a strain measuring instrument ofthe kind referred to above, characterised in that the source of laser beams is suitable for producing two laser beams having different frequencies onto two spots on the test piece at a predetermined angle, the laser applied spots being spaced from each other and aligned in a direction in which a measured strain is produced in the test piece ; the optical sensors for receiving the reflected light from the respective laser applied spots are point sensors, and the arithmetic means includes phase shift detectors for receiving the outputs of the point sensors. respectively, so as to compare them with reference beat signals inherently generated in accordance with the difference in frequency between the two beams, thereby measuring the amount of displacement of the two spots through the outputs of the phase shift detectors, and, hence, the amount of strain from the difference between the amounts of displacement of the laser applied spots.

## BRIEF DESCRIPTION OF THE DRAWINGS

Figure 1 is a block diagram schematically showing an example embodying the present invention;
Figure 2 is a block diagram schematically showing a main portion of the first example;
Figures 3A), 3B), and 3C) are diagrammatical views exemplifying a difference between the data obtained under the present invention and the data obtained by using a conventional extensometer;
Figure 4 is.a block diagram schematically showing another example embodying the present invention; and

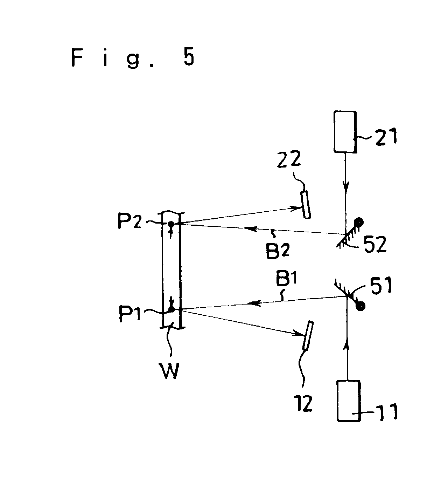

Figure 5 is a schematic view exemplifying the operation of the example shown in Figure 4; and
Figure 6 is a block diagram schematically showing a further example embodying the present invention.

## DETAILED DESCRIPTION OF THE PREFERRED EMBODIMENT

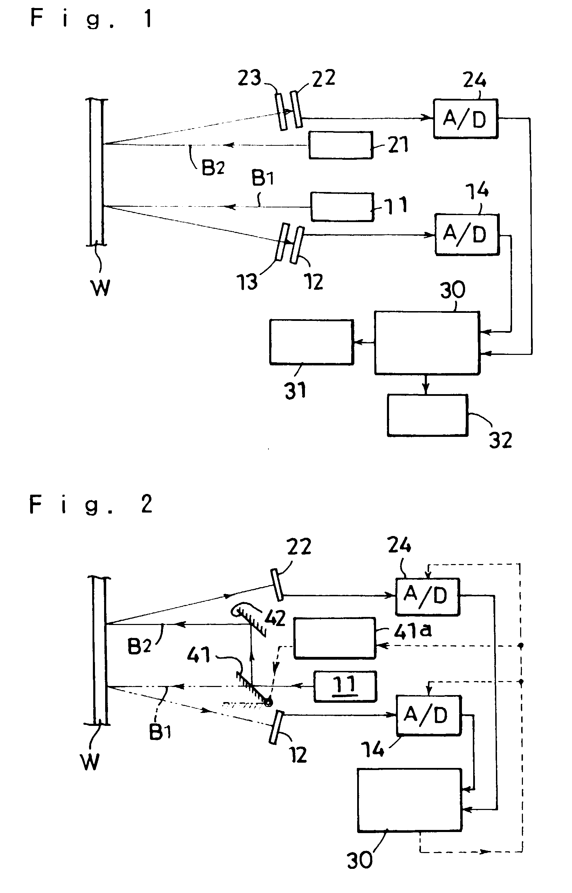

Referring to Figure 1, semiconductor lasers 11 and 21 produce laser beams $B_1$ and $B_2$ having different frequencies and project them at right angles onto two spots $P_1$ and $P_2$ on a test piece W, wherein the spots are spaced from each other by a distance GL. For example, the frequencies of the beams $B_1$ and $B_2$ are respectively 670nm and 780nm.

Reflected light or scattering light on and from the spots $P_1$ and $P_2$ are converged on one-dimensional image sensors 12 and 22 located at the same distance from, and at the same angles against the test piece W, whereby speckle patterns on each spot are independently observed and detected.

The image sensors 12 and 22, each consisting of a photodiode array, are provided with band-pass filters 13 and 23 corresponding to the respective frequencies. Thus, it is ensured that the image sensors 12 and 22 receive laser beams having predetermined frequencies. The outputs from the image sensors 12 and 22 are digitized by an A/D (analog/digital) converter 14 and 24, and placed into a memory of a computer 30.

The computer 30 successively measures a function of correlation between the outputs'of the image sensors 12 and 22 through the A/D converters 14 and 24, and the resulting data is processed in a known manner so as to measure the amounts of displacement $A_{x1}$ $A_{x2}$ of speckle patterns at the spots Pi and P2 and a difference $\Delta$ A between $A_{x1}$ and $A_{x2}$. This difference $\Delta A$ represents the amount of elongation or contraction of the test piece W between the two spots $P_1$ and $P_2$. The differences $\Delta A$ are displayed by an indicator 31 one after another, or else may be plotted on a plotter 32.

The amounts $A_{x1}$ and $A_{x2}$ contain not only data about the displacement of the respective speckle patterns but also contain data about the displacement of the test piece W within the diameters of the spots and a translation thereof. However, by minimizing the diameters of the spots $P_1$ and $P_2$ as much as possible, and also by observing the two reflected lights at the same angle, the data about the local displacement of the test piece W is canceled. As a result, the detected difference $\Delta$ A can be accepted as purely representing a difference between the translations of the test piece W at the laser applied spots $P_1$ and $P_2$. The indicator 31 and plotter 32 indicate elongations or contraction of the test piece W as a whole data, which vary with time.

The use of the band-pass filters 13 and 23 is advantageous in preventing the ambient light such as radiative light from influencing the measurement of the test piece W having an elevated temperature.

Figure 2 shows a main portion of the illustrated example, characterized in that a laser beam output by a single semiconductor laser 11 is used in a time-sharing manner as beams $B_1$ and $B_2$ so as to be projected onto spots $P_1$ and $P_2$ spaced by GL on the test piece W.

More specifically, a movable reflecting mirror 41 is disposed in the path of a laser beam output by the single laser 11 and a fixed reflecting mirror 42 operable in association with the movable reflecting mirror 41. The movable reflecting mirror 41 alternately takes first and second positions by a driver unit 41a controlled by timing signals sent from a computer 30. When taking the first position, the reflecting mirror 41 allows the laser beam $B_1$ to pass through and projects it onto the spot $P_1$ on the test piece W. When taking the second position, it reflects the laser beam $B_2$ and projects onto the spot $P_2$ on the test piece W through the fixed reflecting mirror 42. In this way, the laser beams $B_1$ and $B_2$ are projected at right angles onto the test piece W.

Reflected lights on and from the laser applied spots $P_1$ and $P_2$ are converged on the image sensors 12 and 22, and digitized by the A/D converters 14 and 24. Finally they are placed into a memory in the computer 30. The same timing signals from the computer 30 are delivered to the A/D converters 14 and 24. When the laser beam $B_1$ is projected onto the test piece W, the output of the image sensor 12 is read, and when the laser beam $B_2$ is projected onto the test piece W, the output of the image sensor 22 is read. In this way, the reflected lights on and from the spots $P_1$ and $P_2$ are protected from being influenced by each other.

Subsequently, as described above, a function of correlation between the speckle patterns on the spots $P_1$ and $P_2$ are sought to measure the amounts of displacement $A_{x1}$ and $A_{x2}$. Then, elongation or contraction over the distance GL (i.e. between the spots $P_1$ and $P_2$) is determined on the basis of the difference $\Delta A$ between $A_{x1}$ and $A_{x2}$.

Since semiconductor is an expensive material, this embodiment is economically advantageous because of the use of a single laser.

In the illustrated embodiments, it is possible to arrange that the position of each spot $P_1$ or $P_2$ is jointly or severally adjustable in a mechanical manner. This is advantageous in that the user can set the distance GL between the spots $P_1$ and $P_2$ in accordance with the properties of test pieces. As a result, the apparatus can be applied to various kinds of test pieces.

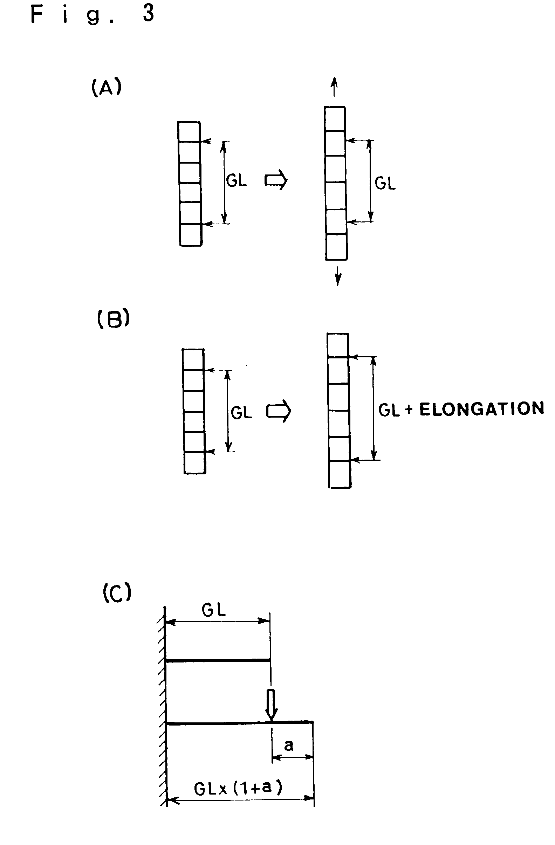

Now, referring to Figures 3(A) to 3(C), the measurement according to the present invention will be compared with the conventional method of measuring elongation:

Figure 3(A) suggests that the amount of displacement $\Delta A$ obtainable from each example described above is an integral value of the amounts of elongation of the test piece W taking place through the spots $P_1$ and $P_2$. In Figure 3(A), the spots $P_1$ and $P_2$ (in other words, points of observation) are fixed with the distance GL maintained therebetween, irrespective of elongation whereas in Figure 3(B) the points of observation are displaced in accordance with the elongation of the test piece, which means that the distance GL becomes elongated which is expressed by (GL + an elongated amount). The latter testing practice adopted by the Japanese Industrial Standard (JIS) is clearly different from the practice according to the present invention. The amount of elongation $\Delta A$ obtained in this way is an integral value of the amounts of displacement of given points on the test piece W passing through the laser applied spots in accordance with the elongation of the test piece W.

In order to compensate for the gap between the present invention and the Japanese Industrial Standard (JIS), the measures obtained under the present invention can be adapted to the definition of elongation stipulated by JIS as follows: In Figure 3(C), it is presumed that the elongation of the test piece W is constant; that is, elongation percentage $\alpha$ is constant. Let a micro-elongation percentage be $d\alpha$, and the micro-displacement through the points of observation is expressed by:

$$\frac{GL}{GL(1+a)} \times da \qquad (1)$$

The integrated elongation percentages from 0 (zero) to $\alpha$ are expressed by:

$$\alpha' = \frac{GL}{GL(1+a)} \times da = \ell n(1+\alpha) \qquad (2)$$

where $\alpha$ is a value corresponding to the elongation prescribed by JIS, and $\alpha'$ is elongation percentage obtainable under the present invention, the $\alpha'$ is expressed by:

$$\alpha' = \frac{\Delta A}{GL} \qquad (3)$$

The value a is obtained from $\alpha'$, that is:

$$\alpha' = \ell n(1+\alpha) \qquad (4)$$

Therefore, $\alpha = e^{\alpha'} - 1$

The equations (3) and (4) are stored in the memory of the computer 30, and $\Delta A$ is represented in terms of (GL x $\alpha$). In this way, the adaptation to the JIS standard is effected.

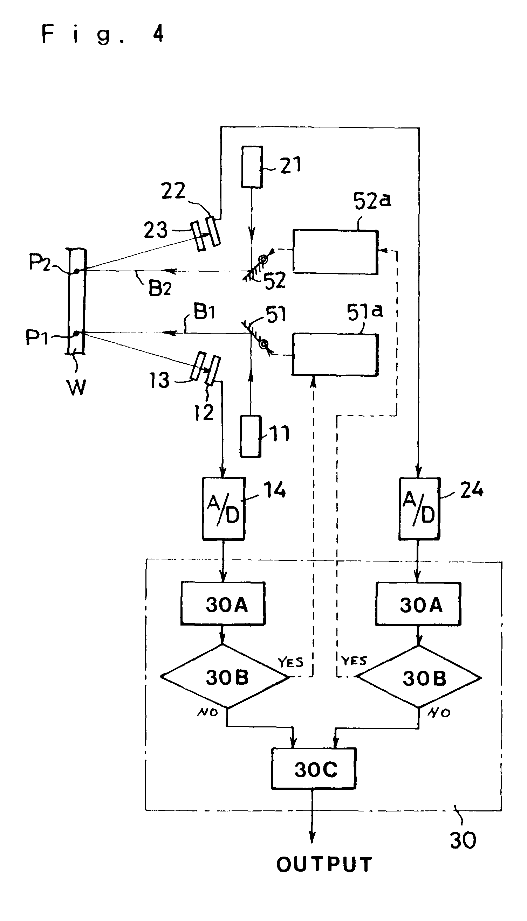

In the illustrated examples, if the test piece W expands beyond the diameters of the laser beam spots, the amounts of displacement can not be measured. The following embodiment has overcome this difficulty, which will be described by referring to Figure 4:

The semiconductor lasers 11 and 21 produce laser beams $B_1$ and $B_2$ having mutually different frequencies and project them onto the spots $P_1$ and $P_2$ spaced by GL on the test piece W. Movable reflecting mirrors 51 and 52 are disposed between the test piece W and the lasers 11 and 21. The movable mirrors 51 and 52 are set at desired angles by mirror driver units 51a and 52a which are controlled by the computer 30.

The image sensors 12 and 22 receive laser beams reflecting from the respective spots $P_1$ and $P_2$ through band-pass filters 13 and 23 corresponding to the frequencies of the laser beams $B_1$ and $B_2$. The outputs are digitized by the A/D converters 14 and 24, and placed into a memory of the computer 30 in which a function of correlation between the speckle patterns is obtained from the A/D converters 14 and 24 (steps 30A). In this way, the amounts of displacement of the speckle patterns at the respective spots $P_1$ and $P_2$ are measured. In this example, a reference value is previously set in the computer 30; for example, the spot diameter of the laser beam can be set as a reference.

At step 30B, if the computer 30 judges that the detected amount of displacement of the laser applied spot $P_1$ or $P_2$ exceeds the reference value, it drives the mirror driver unit 51a or 52a so as to direct the laser beams $B_1$ and $B_2$ at another spots by a predetermined distance in a direction in which the speckle patterns move. While the speckle patterns move, the speckle patterns on the image sensors 11 and 21 change in position. Herein, the amount of displacement of the speckle patterns should not be measured. Under this arrangement, if the angles of the mirrors 51 and 52 are changed instantly as compared with the speed at which displacement occurs in the test piece W, any dimensional error can be ignored. The laser spots can follow the movement (displacement) of the spots $P_1$ and $P_2$ occurring in accordance with the elongation or contraction of the test piece W. In this way, the laser spots can chase after the moving spots $P_1$ and $P_2$. Thus, data about elongation or contraction to the form defined by the Japanese Industrial Standard (JIS) can be obtained without difficulty.

In the example shown in Figure 4, if there is a need for collecting data about the displacement of the test piece W occurring while the laser spots are changed in position, two laser beams can be projected on the spots one of which is moved with the other laser beam being fixed. The amount of displacement of the speckle patterns formed by the fixed laser beam can be gathered as a desired data.

Instead of using the mirror driver units, the laser beams can be moved by means of a support which supports the lasers and the image sensors, and be moved as a whole by a feed screw or similar tools.

A null method can be used so as to nullify the amount of displacement of the speckle patterns by feedback to the laser beam positions. According to this method, a displacement between the target spots on the test piece can be known directly from the amount of displacement of the laser beams.

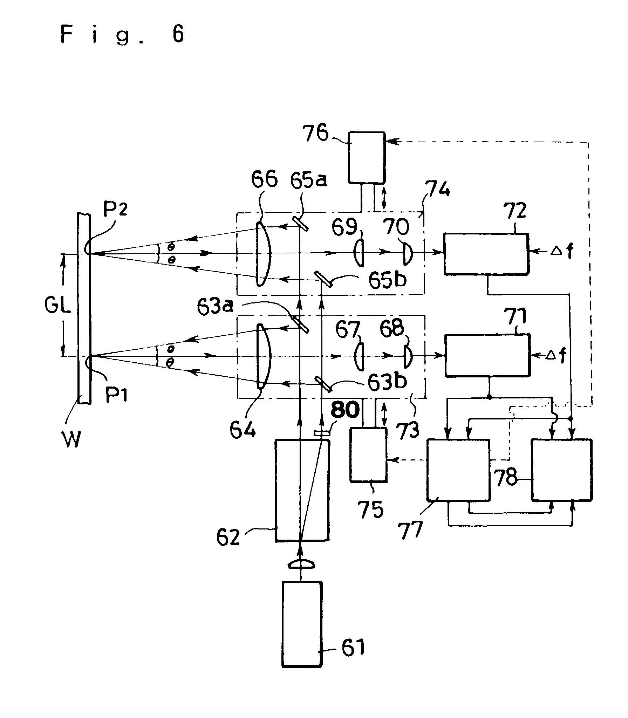

The second example can be applied to a measuring method utilizing Doppler effects which will be described by reference to Figure 6:

A two-frequency laser 61 is typically a He-neon laser utilizing Zeeman effect which outputs two laser beams having different frequencies in a coaxial coherent form as if they form a single beam. The coherent laser beams are then split into a first laser beam and a second laser beam by their proper frequencies by and through a calcite crystal 62. The first and second laser beams are led to beam splitters 63a and 63b. Prior to reaching the beam splitter 63a, the second laser beam passes through a 1/2 frequency plate 80 so as to adjust its optical length.

Portions of the beams reflecting on the beam splitters 63a and 63b are converged by a first condenser lens 64 and projected onto a spot Pi on the test piece W at angle $2\theta$. The other portions of the beams passing through the beam-splitters 63a and 63b reflect on the mirrors 65a and 65b, and after being converged by the second condenser lens 66, are projected onto a spot $P_2$ spaced from the spot $P_1$ by GL at angle $2\theta$.

A lens 67 and a first point sensor 68 are provided on and along each optical axes of the condenser lens 64 and 66, and a lens 69 and a second point sensor 70 are provided on and along each optical axes of the condenser lens 64 and 66. Light beams from the spots $P_1$ and $P_2$ are received by the point sensors 68 and 70, respectively. The reflected light beams produce beats corresponding to the difference in frequency therebetween (difference in frequency), and outputs having waveforms having an intensity depending upon the intervals of beats.

The output of the first point sensor 68 is input to a first phase shift detector circuit 71, and the output of the second point sensor 70 is input to the second phase shift detector circuit 72. Each phase shift detector circuit 71 and 72 is provided with a reference beat signal whose frequency is equal to the frequency difference $\Delta f$ of the laser beams output by the two-frequency laser 61. Each output of the point sensors 68 and 70 is compared with the reference beat signal so as to obtain a phase shift. The phase shifts against the respective reference beat signals, represent values corresponding to the amounts of displacement of the test piece W at the spots $P_1$ and $P_2$.

In Figure 6, the reference numeral 73 denotes a carrier for carrying the first condenser lens 65, the beam-splitters 63a and 63b, the lens 67, and the point sensor 68. Likewise, the reference numeral 74 denotes a carrier for carrying the second condenser lens 66, the mirrors 65a and 65b, the lens 69, and the point sensor 70. The carriers 73 and 74 are coupled to driver units 75 and 76 such that they are independently movable in parallel with the spots $P_1$ and $P_2$ on the test piece W. The driver units 75 and 76 are individually controlled by a control circuit 77.

The first and second phase shift detectors 71 and 72 send signals to the control circuit 77 which then drives the driver units 75 and 76 in accordance with the amount of displacement of the spots $P_1$ and $P_2$. In this

way, each laser beam is enabled to follow the displacement of the spots $P_1$ and $P_2$. As the following method, it is possible to arrange that each time when the spots $P_1$ and $P_2$ moves by a predetermined distance D which does not exceed the diameter of the beam spot, the laser beams can follow them by the same distance D. The amount of movement of the driver units 75 and 76 driven by the control circuit 77, and therefore, the amount of movement of the spots $P_1$ and $P_2$ is placed in an arithmetic circuit 78 together with the outputs of the phase shift detectors 71 and 72. The arithmetic circuit 78 performs as follows:

On the basis of the outputs from the phase shift detectors 71 and 72, the arithmetic circuit 78 calculates the amounts A and B of movement of the spots $P_1$ and $P_2$. In addition, it subtracts the amount of movement D from the amounts A and B. If chases after the spot $P_1$ have taken place n times, the actual amount of movement of the spot $P_1$ will be (nD + A), and if chases after the Spot $P_2$ have taken place m times, the actual amount of movement will be (mD + B). The arithmetic circuit 77 calculates the amount of displacement (e.g. elongation or contraction) of the test piece W between the spots $P_1$ and $P_2$ will be expressed by:

$$(nD + A) - (mD + B)$$

The amount of displacement obtain,ed in this way represents the change in the distance between the original spots $P_1$ and $P_2$ previously set before any strain is produced in the test piece W, and is in accord with the concept of elongation (or contraction) prescribed by the Japanese Industrial Standard (JIS).

**Claims**

1. A strain measuring instrument comprising :

   a source (11,21; 41,42) of laser beams for projecting at least one laser beam on a test piece (W),
   image sensors (12,22) for receiving reflected light from respective laser applied spots on the test piece (W) and
   an arithmetic means (30)for calculating the amount of strain of the test piece by reading outputs from the image sensors (12,22),
   the strain measuring instrument being **characterised in that** the source of laser beams (11,21; 41,42) is suitable for projecting at least one beam onto two spots on the test piece (W), the laser applied spots being spaced from each other and aligned in a direction in which a measured strain is produced in the test piece (W); the image sensors (12,22) are suitable for receiving the reflected light from the respective laser applied spots independently of each other so as to measure the speckle pattern at each respective laser applied spot, and the arithmetic means (30) is suitable for calculating the function of correlation between the speckle pattern at each laser applied spot and measuring the amount of displacement of each speckle pattern so as to determine the amount of strain from the difference between the amounts of displacement of the laser applied spots.

2. The strain measuring instrument according to claim 1, **further characterised in that** the source of laser beams comprises a pair of laser sources (11,21), each having a different frequency of output applied to different spots ($P_1,P_2$) on the test piece (W), and the output beam from each laser is projected on the each laser applied spot, and wherein each of the image sensors (12,22) comprises a band-pass filter (13,23) for passing a light having a frequency corresponding to that thereof.

3. The strain measuring instrument according to claim 1, wherein the source of laser beams is a single unit, and an optical control (41, 41a, 42) system is additionally provided for directing a laser beam output by the source of laser beams alternately to two spots on the test piece (W), and wherein the outputs from the image sensors located in correspondence to the laser applied spots are alternately placed in the arithmetic means (30) synchronously with the displacement of the laser applied spots, and data about reflected light on and from the laser applied spots is used in calculating a function of correlation between the amounts of displacement of the speckle patterns.

4. The strain measuring instrument according to claim 1, 2 or 3, wherein the position of each laser applied spot is adjustable on the test piece (W) so as to adjust the distance (GL) therebetween.

5. The strain measuring instrument according to claim 1, 2, 3 or 4, further comprising means for calculating and indicating the following value:
   when $\alpha'$ is equal to $\Delta$ A/GL, $\alpha = e^{a'} - 1$
   where $\Delta A$ is the difference between the amounts of displacement of the speckle patterns, and GL is the distance between the laser applied spots.

6. The strain measuring instrument according to claim 2 comprising beam chasing means (51, 51a, 52, 52a) for enabling the laser beams to chase after the movement of the laser applied spots, and wherein the arithmetic means (30) calculates the amount of displacement of the speckle patterns at the laser applied spots on the basis of the outputs from the image sensors (12, 20) and the beam chasing means (51, 51a, 52, 52a).

7. The strain measuring instrument according to claim 6. wherein the beam chasing means comprises movable mirrors (51,52) provided in correspondence to the laser applied spots and drive means (51a, 52a) for controlling a moving angle of the movable mirrors by drive.

8. A strain measuring instrument comprising:

a source (12,21; 41,42) of laser beams for projecting at least one laser beam on a test piece (W),
optical sensors (12,22) for receiving reflected light from respective laser applied spots on the test piece (W) and
an arithmetic means (30)for calculating the amount of strain of the test piece by reading outputs from the optical sensors (12,22),
the strain measuring instrument being **characterised in that** the source of laser beams (12,21; 41,42) is suitable for producing two laser beams having different frequencies onto two spots on the test piece at a predetermined angle, the laser applied spots being spaced from each other and aligned in a direction in which a measured strain is produced in the test piece (W);
the optical sensors (12,22) for receiving the reflected light from the respective laser applied spots are point sensors,
and the arithmetic means (30) includes phase shift detectors for receiving the outputs of the point sensors, respectively, so as to compare them with reference beat signals inherently generated in accordance with the difference in frequency between the two beams, thereby measuring the amount of displacement of the two spots through the outputs of the phase shift detectors, and, hence, the amount of strain from the difference between the amounts ofdisplacement of the laser applied spots.

9. The strain measuring instrument according to claim 8 comprising two carriers (73, 74) linearly movable in a direction in which a measured strain is produced, and operable driving units (75, 76) for driving the carriers, each carrier carrying an optical system for projecting a laser beam onto a spot and an optical sensor (68, 70) for receiving the reflected light from the spot.

**Patentansprüche**

1. Dehnungsmeßgerät, umfassend:

eine Laserstrahlenquelle (11, 21; 41, 42) zum Projizieren von wenigstens einem Laserstrahl auf ein Prüfstück (W),
Bildsensoren (12, 22) zum Empfangen von reflektiertem Licht von jeweiligen laserapplizierten Meßflecken auf dem Prüfstück (W),und
ein Rechenmittel (30) zum Errechnen der Menge an Dehnung des Prüfstückes durch Ablesen der Ausgangssignale von den Bildsensoren (12, 22),
wobei das Dehnungsmeßgerät dadurch gekennzeichnet ist, daß die Laserstrahlenquelle (11, 21; 41, 42) zum Projizieren von wenigstens einem Strahl auf zwei Meßflecken auf dem Prüfstück (W) geeignet ist, wobei die laserapplizierten Meßflecke voneinander beabstandet und in einer Richtung ausgerichtet sind, in der eine gemessene Dehnung im Prüfstück (W) erzeugt wird; die Bildsensoren (12, 22) zum Empfangen des reflektierten Lichtes von den jeweiligen laserapplizierten Meßflecken unabhängig voneinander geeignet sind, um das Tupfenmuster an jedem jeweiligen laserapplizierten Meßfleck zu messen, und das Rechenmittel (30) zum Berechnen der Korrelationsfunktion zwischen den Tupfenmustern an den einzelnen laserapplizierten Meßflecken und zum Messen des Verschiebungsbetrags jedes Tupfenmusters geeignet ist, um die Menge an Dehnung anhand der Differenz zwischen den Verschiebungsbeträgen der laserapplizierten Meßflekken zu bestimmen.

2. Dehnungsmeßgerät nach Anspruch 1, ferner dadurch gekennzeichnet, daß die Laserstrahlenquelle ein Paar Laserquellen (11, 21) umfaßt, die jeweils eine andere Ausgabefrequenz haben, die auf verschiedene Meßflecken (P1, P2) auf dem Prüfstück (W) angewendet wird, und der Ausgangsstrahl von jedem Laser auf jeden laserapplizierten Meßfleck projiziert wird, und wobei jeder der Bildsensoren (12, 22) einen Bandpaßfilter (13, 23) umfaßt, um Licht mit einer Frequenz durchzulassen, die dessen Frequenz entspricht.

3. Dehnungsmeßgerät nach Anspruch 1, bei dem die Laserstrahlenquelle eine einzelne Einheit ist und zusätzlich ein optisches Steuersystem (41, 41a, 42) vorgesehen ist, um einen Laserstrahlausgang durch die Laserstrahlenquelle abwechselnd auf zwei Meßflecken auf dem Prüfstück (W) zu richten, und wobei die Ausgangssignale von den Bildsensoren, deren Position den laserapplizierten Meßflecken entspricht, abwechselnd in das Rechenmittel (30) synchron zur Verschiebung der laserapplizierten Meßflecken gespeist werden, und Daten über reflektiertes Licht auf die und von den laserapplizierten Meßflecken bei der Berechnung einer Korrelationsfunktion zwischen den Verschiebungsbeträgen der Tupfenmuster verwendet werden.

4. Dehnungsmeßgerät nach Anspruch 1, 2 oder 3, bei dem die Position jedes laserapplizierten Meßflecks auf dem Prüfstück (W) einstellbar ist, um den Abstand (GL) dazwischen zu justieren.

5. Dehnungsmeßgerät nach Anspruch 1, 2, 3 oder 4, ferner umfassend ein Mittel zum Berechnen und Anzeigen des folgenden Wertes:

wenn $\alpha'$ gleich $\Delta A/GL$, $\alpha = e^{\alpha'} - 1$

wobei $\Delta A$ die Differenz zwischen den Verschiebungsbeträgen der Tupfenmuster und GL der Abstand zwischen den laserapplizierten Meßflecken ist.

6. Dehnungsmeßgerät nach Anspruch 2, umfassend ein Strahlenverfolgungsmittel (51, 51a, 52, 52a), mit dem die Laserstrahlen die Bewegung der laserapplizierten Meßflecken verfolgen können, und wobei das Rechenmittel (30) den Verschiebungsbetrag der Tupfenmuster an den laserapplizierten Meßflecken auf der Basis der Ausgangssignale von den Bildsensoren (12, 20) und dem Strahlenverfolgungsmittel (51, 51a, 52, 52a) berechnet.

7. Dehnungsmeßgerät nach Anspruch 6, bei dem das Strahlenverfolgungsmittel bewegliche Spiegel (51, 52), die entsprechend den laserapplizierten Meßflecken vorgesehen sind, und Antriebsmittel zum Steuern eines Bewegungswinkels der beweglichen Spiegel durch Antrieb umfaßt.

8. Dehnungsmeßgerät, umfassend:

eine Laserstrahlenquelle (11, 21; 41, 42) zum Projizieren von wenigstens einem Laserstrahl auf ein Prüfstück (W),

optische Sensoren (12, 22) zum Empfangen von reflektiertem Licht von jeweiligen laserapplizierten Meßflecken auf dem Prüfstück (W), und

ein Rechenmittel (30) zum Errechnen der Menge an Dehnung des Prüfstückes durch Ablesen der Ausgangssignale von den optischen Sensoren (12, 22),

wobei das Dehnungsmeßgerät dadurch gekennzeichnet ist, daß die Laserstrahlenquelle (11, 21; 41, 42) zum Erzeugen von wenigstens zwei Laserstrahlen mit zwei unterschiedlichen Frequenzen auf zwei Meßflecken auf dem Prüfstück in einem vorbestimmten Winkel geeignet ist, wobei die laserapplizierten Meßflecken voneinander beabstandet und in einer Richtung ausgerichtet sind, in der eine gemessene Dehnung in dem Prüfstück (W) erzeugt wird;

die optischen Sensoren (12, 22) zum Empfangen des reflektierten Lichtes von den jeweiligen laserapplizierten Meßflecken Punktsensoren sind,

und das Rechenmittel (30) Phasenverschiebungsdetektoren zum Empfangen der Ausgangssignale der jeweiligen Punktsensoren enthält, um sie mit Referenzschwebungssignalen zu vergleichen, die inhärent gemäß der Frequenzdifferenz zwischen den beiden Strahlen erzeugt werden, um so den Verschiebungsbetrag der beiden Meßflecken durch die Ausgangssignale der Phasenverschiebungsdetektoren und somit die Menge an Dehnung anhand der Differenz zwischen den Verschiebungsbeträgen der laserapplizierten Meßflecken zu messen.

9. Dehnungsmeßgerät nach Anspruch 8, umfassend zwei Träger (73, 74), die linear in einer Richtung beweglich sind, in der eine gemessene Dehnung erzeugt wird, und bedienbare Antriebseinheiten (75, 76) zum Antreiben der Träger, wobei jeder Träger ein optisches System zum Projizieren eines Laserstrahls auf einen Meßfleck und einen optischen Sensor (68, 70) zum Empfangen des reflektierten Lichtes von dem Meßfleck trägt.

## Revendications

1. Instrument de mesure de déformation comprenant :

une source (11,21 ; 41,42) de faisceaux laser pour projeter au moins un faisceau laser sur une pièce testée (W),

des capteurs d'image (12, 22) pour recevoir une lumière réfléchie par des emplacements d'application de laser respectifs sur la pièce testée (W) et

un moyen arithmétique (30) pour calculer la quantité de déformation de la pièce testée en lisant les sorties des capteurs d'image (12, 22), l'instrument de mesure de déformation étant **caractérisé en ce que** la source de faisceaux laser (11,21 ; 41,42) convient pour projeter au moins un faisceau sur deux emplacements sur la pièce testée (W), les emplacements d'application de laser étant espacés l'un de l'autre et alignés dans un sens dans lequel une déformation mesurée est produite dans la pièce testée (W) ; les capteurs d'image (12,22) conviennent pour recevoir la lumière réfléchie par les emplacements d'application de laser respectifs indépendamment l'un de l'autre de manière à mesurer la configuration de tacheture au niveau de chaque emplacement d'application de laser respectif, et le moyen arithmétique (30) convient pour calculer la fonction de corrélation entre la configuration de tacheture au niveau de chaque emplacement d'application de laser et mesurer la quantité de déplacement de chaque configuration de tacheture de manière à déterminer la quantité de déformation à partir de la différence entre les quantités de déplacement des emplacements d'application du laser.

2. Instrument de mesure de déformation selon la revendication 1, **caractérisé en outre en ce que** la source de faisceaux laser comprend une paire de sources laser (11, 21), chacun ayant une fréquence de sortie différente appliquée à des emplacements différents (P1, P2) sur la pièce testée (W), et le faisceau de sortie de chaque laser est projeté sur chaque emplacement d'application de laser, et dans lequel chacun des capteurs d'image (12, 22) comprend un filtre passe-bande (13, 23) pour passer une lumière ayant une fréquence correspondant à celle de celui-ci.

3. Instrument de mesure de déformation selon la revendication 1, dans lequel la source de faisceaux laser est une unité unique, et un système de commande optique (41, 41a, 42) est fourni en plus pour diriger une sortie de faisceau laser par la source de faisceaux laser en alternance vers deux emplacements sur la pièce testée (W), et dans lequel les sorties des capteurs d'image situés en correspondance par rapport aux emplacements d'application de laser sont placées en alternance dans le moyen arithmétique (30) de manière synchrone avec le déplacement des emplacements d'application de laser, et les données au sujet de la lumière réfléchie sur et par les emplacements d'application de laser sont utilisées dans le calcul d'une fonction de corrélation entre les quantités de déplacement des configurations de tachetures.

4. Instrument de mesure de déformation selon la revendication 1, 2 ou 3, dans lequel la position de chaque emplacement d'application de laser est réglable sur la pièce testée (W) de manière à régler la distance (GL) entre eux.

5. Instrument de mesure de déformation selon la revendication 1, 2, 3 ou 4, comprenant en outre un moyen pour calculer et indiquer la valeur suivante :
quand $\alpha'$ est égal à $\Delta$ A/GL, $\alpha = e^{\alpha'} - 1$
où $\Delta$ A est la différence entre les quantités de déplacement des configurations de tachetures, et GL est la distance entre les emplacements d'application de laser.

6. Instrument de mesure de déformation selon la revendication 2, comprenant un moyen de suivi pour faisceaux (51, 51a, 52, 52a) pour permettre aux faisceaux laser de suivre le mouvement des emplacements d'application de laser, et dans lequel le moyen arithmétique (30) calcule la quantité de déplacement des configurations de tachetures au niveau des emplacements d'application de laser en fonction des sorties des capteurs d'image (12, 20) et du moyen de suivi pour faisceaux (51, 51, 52, 52a).

7. Instrument de mesure de déformation selon la revendication 6, dans lequel le moyen de suivi pour faisceau comprend des miroirs mobiles (51, 52) fournis en correspondance par rapport aux emplacements d'application de laser et des moyens d'entraînement (51a, 52a) pour commander un angle mobile des miroirs mobiles par entraînement.

8. Instrument de mesure de déformation comprenant :

une source (11,21 ; 41,42) de faisceaux laser pour projeter au moins un faisceau laser sur une pièce testée (W),
des capteurs optiques (12, 22) pour recevoir une lumière réfléchie par des emplacements d'application de laser respectifs sur la pièce testée (W) et
un moyen arithmétique (30) pour calculer la quantité de déformation de la pièce testée en lisant les sorties des capteurs optiques (12, 22),
l'instrument de mesure de déformation étant **caractérisé en ce que** la source de faisceaux laser (11,21 ; 41,42) convient pour produire deux faisceaux laser ayant des fréquences différentes sur deux emplacements sur la pièce testée à un angle prédéterminé, les emplacements d'application de laser étant espacés l'un de l'autre et alignés dans un sens dans lequel une déformation mesurée est produite dans la pièce testée (W) ;
les capteurs optiques (12,22) pour recevoir la lumière réfléchie par les emplacements d'application de laser respectifs sont des capteurs ponctuels,
et le moyen arithmétique (30) comporte des détecteurs de déphasage pour recevoir les sorties des capteurs ponctuels, respectivement, de manière à les comparer à des signaux de battement de référence générés de manière inhérente conformément à la différence de fréquence entre les deux faisceaux, mesurant ainsi la quantité de déplacement des deux emplacements au moyen des sorties des détecteurs de déphasage, et de là, la quantité de déformation à partir de la différence entre les quantités de déplacement des emplacements d'application de laser.

**EP 0 629 835 B1**

9. Instrument de mesure de déformation selon la revendication 8, comprenant deux supports (73, 74) pouvant se déplacer linéairement dans un sens dans lequel une déformation mesurée est produite, et des unités d'entraînement actionnables (75, 76) pour entraîner les supports, chaque support portant un système optique pour projeter un faisceau laser sur un emplacement et un capteur optique (68, 70) pour recevoir la lumière réfléchie par l'emplacement.

Ｆｉｇ． 1

Ｆｉｇ． 2

# Fig. 3

(A)

(B)

GL + **ELONGATION**

(C)

GL

a

GL × (1+a)

Fig. 4

OUTPUT

F i g .  5

Fig. 6